# EUROPEAN PATENT SPECIFICATION

(11) **EP 0 747 534 B1**
(45) Date of publication and mention of the grant of the patent: **18.12.2002**
(21) Application number: 95108860.8
(22) Date of filing: 08.06.1995
(51) Int. Cl.: E02B 3/06, E02B 3/04, A01K 61/00

(54) **Artificial reef structure**
Künstliche Riffanlage
Structure artificielle de récif

(43) Date of publication of application: 11.12.1996
(73) Proprietor: Liaw, Chung-Yi, Taipei (TW)
(72) Inventor: Liaw, Chung-Yi, Taipei (TW)
(74) Representative: Winkler, Andreas, Dr.

(56) References cited:
- WO-A-93/25764
- FR-A- 2 303 119
- US-A- 3 357 192
- US-A- 3 884 042
- US-A- 3 928 701
- US-A- 5 213 058
- DATABASE WPI Week 198439, Derwent Publications Ltd., London, GB; Class P14, AN 1984-242018 & SU 1 069 743 A (BALTIC FISHING RES) 30 January 1984

## Description

### FIELD OF THE INVENTION

The present invention relates generally to an artificial reef structure which can be used as both a fender structure and a wave breaker, as well as a fish reef in which fishes and other sea creatures breed and feed.

### Background of the Invention

It is always desired to provide wave breaking device along or close seashore or pier or jetty to protect them from being damaged by strong tides and waves. On the other hand, it is also desired to have a resilient device located along pier or jetty to serve as fender for protection both the pier and ships from damage due to violent collision therebetween. Further, it is also desired to provide an artificial reef which has a plurality of cavities to allow fishes and other sea creatures to feed and breed therein for improving ecological prosperity.

Thus it is desirable to provide an artificial reef structure which satisfies the above requirements.

FR-A-2 303 119 disclosed an artificial reef structure according to the preamble of claim 1.

### SUMMARY OF THE INVENTION

An object of the present invention is to provide an artificial reef structure which comprises a floating platform under which "tire tree" is secured to extend to any desired water or sea depth so as to provide the capability of breaking or crashing tides or waves to protect seashore or pier or jetty from being damaged by strong tides or waves.

Another object of the present invention is to provide an artificial reef structure which comprises a floating platform formed by a combination of a plurality of buoy units under which a plurality of waste tires are secure to provide cavities for fishes and other sea creatures to feed and breed.

A further object of the present invention is to provide an artificial reef of which the reef structure is formed by a number of waste tires so as to provide a new way to make use of the great quantity of waste tires.

In accordance with the present invention, there is provided an artificial reef structure comprising a plurality of vertically extending rows of waste tires and a floating platform comprising a plurality of buoy units secured together with buoy securing means to form the floating platform and having an underside and tire securing means to secure said plurality of vertically extending rows of waste tires to the underside of the floating platform with the rows extending to given depths under sea surface, characterized in that the tire securing means comprises a plurality of vertically extending elongated posts secured to the buoy units and extending downward from the underside of the platform, each of the posts having a plurality of crossbars extending transversely therefrom and arranged in a spaced manner to allow the waste tires to be hung on the crossbars.

### BRIEF DESCRIPTION OF DRAWINGS

The present invention will be better understood from the following description of preferred embodiments of the present invention, with reference to the attached drawing, wherein:
**Figure 1** is a perspective view showing an artificial reef constructed in accordance with a first embodiment of the present invention;
**Figure 2** is a side elevational view showing the artificial reef constructed in accordance with the first embodiment of the present invention; and
**Figure 3** is a perspective view showing a protion of an artificial reef which is not part of the present invention.

### DETAILED DESCRIPTION OF THE PREFERRED EMBODIMENTS

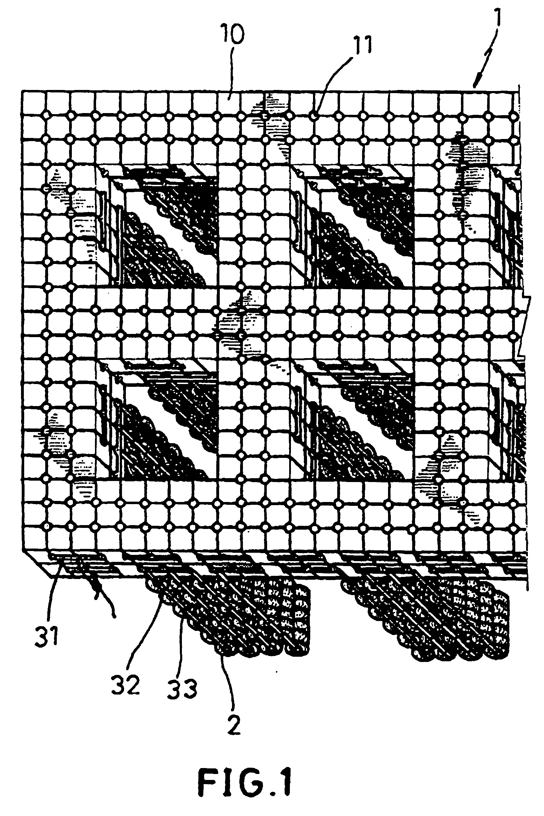

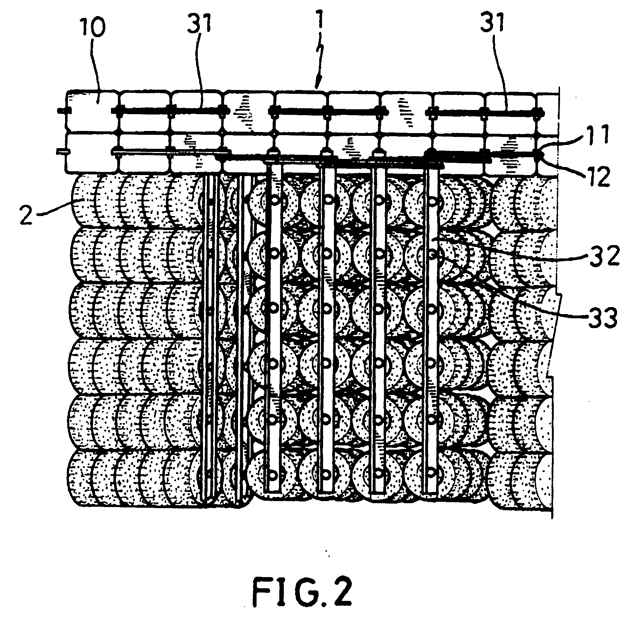

With reference to the drawings and in particular **Figures 1 and 2,** wherein an artificial reef constructed in accordance with the present invention is shown, the artificial reef comprises buoy means 1 which may be a combination of a plurality of individual buoy units 10 each having locking lugs 12 formed thereon to allow two adjacent buoy units 10 to be jointed by connecting pegs 11 which are engageable with the locking lugs 12. A floating platform can thus be formed of any desired shape and configuration with any desired number of buoy units 10 extending in any desired direction.

The buoy units 10 are further secured together by means of side connecting plates 31 which may extend across a number of buoy units 10 at any lateral side of the platform. As shown in **Figure 2**, the side connecting plates 31 are secured to the locking lugs 12 with the pegs 11 to provide a more secure combination of the buoy units 10.

The artificial reef of the present invention comprises a plurality of vertically extending, elongated posts 32 each having one end secured to one of the connecting pegs 11 secured to the buoy units 10. The posts 32 extend in a direction substantially normal to the platform. The posts 32 may have any desired length and may be different from each other in length.

Each of the posts 32 has a plurality of transverse pins or crossbars 33 extending therefrom and arranged in a spaced manner with a plurality of waste tires 2 fit over and thus hung on each of the crossbars 33. The crossbars 33 may have a cantilever type free remote end or the remote end thereof may be secured to another post 32. Apparently, the spacing between two adjacent crossbars 33 that are extending from the same post 32 is sufficient to receive the waste tires 2 to hang on the crossbars 33. The weight of the waste tires 2 lowers down the gravity center of the overall structure of the artificial reef so as to stabilize the artificial reef on sea or water surface.

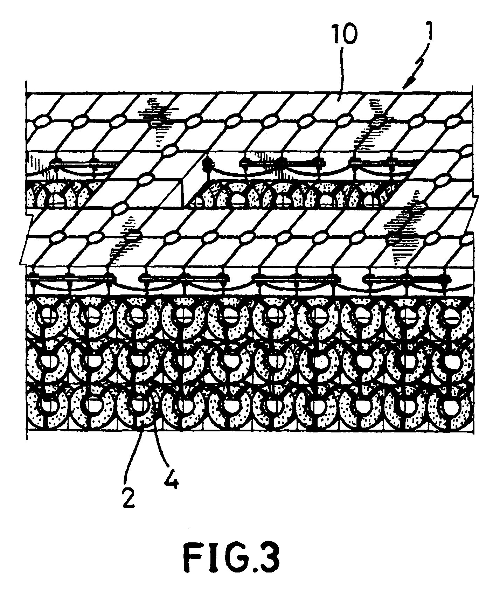

The securing of the waste tires 2 under the floating platform formed by the buoy units 10 can be done in any one of a number of other suitable manners. For example, the waste tires 2 can be tied to the underside of the buoy platform with for example ropes or chains or net 4, as shown in **Figure 3**. The tires 2 can be tied on the platform and on other tires 2 in a un-limited manner so as to allow the "tire tree" to extend to any desired depth under water surface or sea surface to satisfy different geographic requirement.

Apparently, the floating artificial reef may be anchored in sea with any known anchoring devices (not shown).

The artificial reef provides the following advantages.
(1) The reef structure that is formed by the waste tires and hung under the floating platform can be used, when appropriately constructed, to break and crash sea tides at sea depth of more than three and half meters so as to reduce the impact of the tides acting upon seashore or pier or jetty. It has been proven that the artificial reef of the present invention has the capability to break or crash tides or waves up to 80 %.
(2) The reef structure formed by the waste tires can provide places for fishes and other sea creatures to feed and breed due to the cavities provided by the ring or donut shapes of the tires and thus prompting ecological prosperity.
(3) The reef structure of the present invention is formed by means of a great number of waster tires and thus provides a new way to re-cycle or utilize the waste tires and solve pollution problem caused by the waste tires.

It is apparent that although the invention has been described in connection with the preferred embodiments, it is contemplated that those skilled in the art may make changes to the preferred embodiments without departing from the scope of the invention as defined in the appended claims.

## Claims

1. An artificial reef structure comprising a plurality of vertically extending rows of waste tires and a floating platform comprising a plurality of buoy units (10) secured together with buoy securing means to form the floating platform, said floating platform having an underside and tire securing means to secure said plurality of vertically extending rows of waste tires (2) to the underside of the floating platform with the rows adapted to extend to given depths under sea surface, **characterized in that** the tire securing means comprises a plurality of vertically extending elongated posts (32) secured to the buoy units (10) and extending downward from the underside of the platform, each of the posts (32) having a plurality of crossbars (33) extending transversely therefrom and arranged in a spaced manner to allow the waste tires (2) to be hung on the crossbars (33).

2. The artificial reef structure as claimed in claim 1, wherein the buoy securing means comprises locking lugs (12) formed on each of the buoy units (10) and connecting pegs (11) each of which engages the locking lugs (12) of two adjacent ones of the buoy units (10).

3. The artificial reef structure as claimed in claim 2, wherein the buoy securing means further comprises side connecting plates (31) each extending across a number of buoy units (10) and secured to the locking lugs (12) of the number of buoy units (10).

## Patentansprüche

1. Eine künstliche Riffstruktur mit mehreren sich vertikal erstreckenden Reihen von Altreifen und einer Schwimmplattform, die mehrere Bojeneinheiten (10) umfaßt, die zur Bildung der Schwimmplattform mit Bojensicherungsmitteln aneinander gesichert sind, wobei die Schwimmplattform eine Unterseite und Reifensicherungsmittel zum Sichern der Mehrzahl von sich vertikal erstreckenden Reihen von Altreifen (2) an der Unterseite der Schwimmplattform aufweist, wobei die Reihen gestaltet sind, um sich zu vorgegebenen Tiefen unter der Meeresoberfläche zu erstrecken, **dadurch gekennzeichnet, daß** das Reifensicherungsmittel mehrere sich vertikal erstreckende längliche Pfosten (32) umfaßt, die an den Bojeneinheiten (10) gesichert sind und sich von der Unterseite der Plattform nach unten erstrecken, wobei jeder Pfosten (32) mehrere Querträger (33) aufweist, die sich davon transversal erstrecken und in einer beabstandeten Weise angeordnet sind, um zuzulassen, daß die Altreifen (2) an die Querträger (33) zu hängen sind.

2. Künstliche Riffstruktur nach Anspruch 1, **dadurch gekennzeichnet, daß** das Bojensicherungsmittel Sicherungsschenkel (12), die an jeder Bojeneinheit (10) ausgebildet sind, und Verbindungspfähle (11) umfaßt, von denen jeder die Sicherungsschenkel (12) zweier benachbarter Bojeneinheiten (10) eingreift.

3. Künstliche Riffstruktur nach Anspruch 2, **dadurch gekennzeichnet, daß** das Bojensicherungsmittel ferner Seitenverbindungsplatten (31) umfaßt, die sich jeweils quer über eine Anzahl von Bojeneinheiten (10) erstrecken und an den Sicherungsschenkeln (12) der Anzahl von Bojeneinheiten (10) gesichert sind.

## Revendications

1. Structure de récif artificiel comprenant une pluralité de rangées s'étendant verticalement de pneus de rebut et une plate-forme flottante comprenant une pluralité d'unités de bouées (10) fixées ensemble avec des moyens de fixation de bouée afin de constituer la plate-forme flottante, ladite plate-forme flottante comportant une face inférieure et des moyens de fixation de pneu pour fixer ladite pluralité de rangées s'étendant verticalement de pneus de rebut (2) à la face inférieure de la plate-forme flottante, les rangées étant adaptées pour s'étendre à des profondeurs données sous la surface de la mer, **caractérisée en ce que** les moyens de fixation de pneus comprennent une pluralité de pieux allongés s'étendant verticalement (32) fixés aux unités de bouées (10) et s'étendant vers le bas depuis la face inférieure de la plate-forme, chacun des pieux (32) comportant une pluralité de traverses (33) s'étendant transversalement depuis celui-ci, et agencées de manière espacée pour permettre aux pneus de rebut (2) de pendre sur les traverses (33).

2. Structure de récif artificiel selon la revendication 1, dans lequel les moyens de fixation de bouée comprennent des pattes de blocage (12) formées sur chacune des unités de bouées (10) et des chevilles de liaison (11) dont chacune s'engage dans les pattes de blocage (12) des deux unités adjacentes parmi les unités de bouées (10).

3. Structure de récif artificiel selon la revendication 2, dans laquelle les moyens de fixation de bouée comprennent en outre des plaques de liaison latérales (31) s'étendant chacune sur un certain nombre d'unités de bouées (10) et fixées aux pattes de blocage (12) du nombre d'unités de bouées (10).
